# EUROPEAN PATENT SPECIFICATION

(11) **EP 2 222 805 B1**
(45) Date of publication and mention of the grant of the patent: **06.11.2013**
(21) Application number: 08861429.2
(22) Date of filing: 17.12.2008
(51) Int. Cl.: C09D 177/12, C09D 179/08, C21D 8/12, H01F 1/18, H01F 41/02, B82Y 30/00, C09D 163/00, C09J 163/00, H01F 27/245

(54) **PROCESS OF COATING ELECTRICAL STEEL**
VERFAHREN ZUR BESCHICHTUNG VON ELEKTROSTAHL
PROCÉDÉ DE REVÊTEMENT DE L'ACIER ÉLECTRIQUE

(30) Priority: 18.12.2007 US 8063 P
(43) Date of publication of application: 01.09.2010
(73) Proprietor: Coatings Foreign IP Co. LLC, Wilmington, DE 19801 (US)
(72) Inventor: BOEHM, Frank-Rainer, 51519 Odenthal (DE); HERM, Michael, 42553 Velbert (DE); FROSCHAUER, Barbara, A-2352 Gumpoldskirchen (AT)
(74) Representative: Maiwald Patentanwalts GmbH
(86) International application number: PCT/US2008/087111
(87) International publication number: WO 2009/079540

(56) References cited:
- EP-A- 0 659 855
- EP-A- 1 568 724
- WO-A-2006/049935
- WO-A-2007/019434
- WO-A-2008/079237

## Description

### Field of the Invention

The present invention refers to a coating process for electrical steel using a core sheet varnish composition based on new polyester amide imides and polyester amides and providing excellent adhesion of the coatings.

### Background of the Invention

Electrical steel sheet varnishes to coat individual electrical steel sheets are known. The coated electrical steel sheets can be assembled together by different technical means such as welding, clamping, interlocking, aluminium die casting or riveting to form a solid core for the use in electrical equipment, such as, transformers, generators and motors. The coatings provide electrical insulation between the metal sheets in core and should be able to meet the requirements of high surface insulation resistance, resistance to mechanical stress and corrosion and thermal stability.

JP 07336969, JP 2000345360 and EP-A 923 088 relate to enamels for coating electrical steel sheets wherein the enamels contain particles, such as, silica or alumina colloid particles. The compositions result in coatings having properties, such as, good scratch, blocking, chemical and corrosion resistance and high surface insulation ability. Such coatings have no bonding function and need additional means of bonding (welding, clamping, interlocking, aluminium die casting or riveting) to form a solid core.

There are some known coating systems in use for the coating of electrical steel sheets suitable for e.g. welding or punching application to form a solid core. In view of this, the core sheet varnish selection is frequently a compromise since there are occasions when a single coating will not fulfil all requirements. The known ranking classes of such coatings, for example class C3, class C5, class C6 (registered as standards under AISI-ASTM A 976-03) show the different requirements of coatings in this field with regard to such properties. The coating may be only an organic mixture (C3 insulation type) or an organic/inorganic mixture of complex resins and chromate, phosphate and oxides (C5 and C6 insulation type).

C3 coatings based on organic resins, e.g., phenol, alkyd, acrylic and epoxy resin are used. The C3 coating will enhance punchability and is resistant to normal operating temperatures but will not withstand stress-relief annealing. In general, the C5 coating can be on the one hand a semi organic coating with very good punchability and good welding response and on the other hand a basically inorganic coating with organic resins and inorganic fillers, which has excellent welding and heat-resistance properties with good punchability. But C5 coatings generally based on chromate-, phosphate- or on titanate-compounds, and they are therefore not environmental friendly, particularly with respect to the remaining carcinogenic level, or they can tend to hygroscopicitiy and insufficient annealing and corrosion resistance, or can show insufficient welding properties. C6 coatings are organic coatings with a high content of fillers approximately of 50 wt%.

The known systems are not able to combine different technical requirements, such as, welding, clamping, interlocking, punching, riveting, pressure resistance and thermal resistance to provide a high property profile standard.

Known are reactive systems based on a reaction product with ethyl alpha-carboxy-beta-cyclopentanoate for the manufacture of coatings for corrosion protection, see DE-A 10260299 and DE-A 10260269. The WO 2007/019434 discloses wire coating compositions based on specific resins to significantly increase the enamelling speed significantly. Such coatings do not meet the properties necessary for electrical steel because, particularly, melamine resin coating systems and/or polyol/isocyanate coating systems can show brittleness of the coatings as well as non-desired emissions of low molecular products hazardous to health.

Furthermore, WO 2007/019434 discloses a process of enamelling an electrically conductive wire which is a complete different process compared to a process of coating electrical steel. WO 2006/049935 refers to a coating composition for the production of electrical steel sheets cores wherein the composition is based on other resins.

With regard to WO 2007/019434, enamelling electrically conductive wires means applying the coating composition to a single un-wound wire and curing the coating on the un-wound single wire wherein coating and curing may take place several times in succession. Coating electrical steel means applying a core sheet varnish by spraying, rolling or dip coating onto the surface of electrical steel, and the coated electrical steel sheets are stacked and assembled together to form a sheets core. The effects of excellent adhesion and chemical properties are not disclosed in WO 2007/019434. The composition of WO 2006/049935 does not comprise resins having α-carboxy-β-oxocycloalkyl carboxylic acid amide groups and, therefore, is not able to provide the effects of excellent adhesion and chemical properties.

### Summary of the Invention

The invention provides a coating process for electrical steel using a core sheet varnish composition, as recited in claim 1.

The process according to the invention provides excellent adhesion of the coatings to the surface of the electrical steel as well as, surprisingly, high corrosion resistance of the coatings and good electrical insulation. The coatings provided by the process according to the invention show high property profile standard combining the different technical requirements, such as, welding, clamping, interlocking, punching, riveting, high pressure and thermal resistance of electrical steel sheets coated with the composition according to the invention and of cores produced from these coated electrical steel sheets. The coatings provide better adhesion and mechanical properties than those of the prior art. It is possible to provide very thin coating layers in the range under 1 micrometer, in combination with excellent adhesion and corrosion resistance. The coating composition of the process according to the invention is usable as one-component system.

### Detailed Description

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges can be used to achieve substantially the same results as values within the ranges. Also, the disclosure of these ranges is intended as a continuous range including every value between the minimum and maximum values.

The application of the coating composition by the process according to the invention proceeds, e.g., by spraying, rolling or dip coating onto the surface of one or both sides of the electrical steel.

The surface of the electrical steel, for example steel sheets, may be coated or uncoated, pre-treated or un-pre-treated prior to the application according step a) of the process of the invention. The sheets may be pre-treated, for example, by washing in order to remove soiling, grease and other deposits. Preferred pre-washed and uncoated electrical steel sheets are used, coated with the composition according to the invention, preferably by a one-layer-coating.

Subsequently the cross-linking (curing) of the coating on the steel sheet takes places by thermal curing under definite curing conditions, preferably, at temperatures providing a PMT (peak metal temperature) in the range of 180 to 270°C, preferably 230 to 260°C. The curing temperatures can be, for example, in the range of 200 to 600°C, preferred 300 to 450°C, in a time period of 10 seconds to 1 minute, preferably 10 to 40 seconds. The curing temperatures can also be, for example, in the range of 100 to 300°C, in a time period of, for example, 60 to 120 minutes. The necessary heat can be supplied, for example, in an oven, by means of induction heating, infrared (IR) radiation, near infrared (NIR) radiation and/or hot air.

After curing, parts can be punched out of the coated steel sheet and can then be stacked and assembled to form a sheets core by different technical means, such as, welding, clamping, interlocking, aluminium die casting or riveting, preferably by welding, if necessary, by supply of heat and pressure.

Therefore, the invention is also directed to a process for the production of electrical steel sheet cores.

It is possible to apply the composition according to the invention as a water-based or a solvent-based coating composition.

Examples of component A) are resins such as poly(meth)acrylates, polyurethanes, alkyd resins, epoxy resins, polyesters, polyester amides/imides, silicon resins, polyolefines, polyvinyl alcohols, polytitanesters. The production of the resins of component A) is known from the specialist literature, see, for example, Behr, "Hochtemperaturbeständige Kunststoffe" Hanser Verlage, Munich 1969; Cassidy, "Thermally Stable Polymers" New York: Marcel Dekker, 1980; Frazer, "High Temperature Resistant Polymers" New York: Interscience, 1968; Mair, Kunststoffe 77 (1987) 204.

As component A) a polyurethane resin, for example, an aliphatic polyurethane resin can be used having an acid value (mg KOH/g solid resin) in the range of 18 to 33 and a hydroxyl value (mg KOH/g solid resin) in the range of 100 to 170. The average molar mass Mn of the polyurethane resin can be, for example from 13000 to 25000.

As component A) polyesters may also be used, particularly polyesters with heterocyclic nitrogen-containing rings, for example, polyesters with imide, hydantoin, benzimidazole, amide and/or amide imide structures condensed into the molecule. The polyesters are, in particular, condensation products of polybasic aliphatic, aromatic and/or cycloaliphatic carboxylic acids and the anhydrides thereof, polyhydric alcohols and, in the case of the imide-containing polyesters, polyester amino group-containing compounds, optionally, with a proportion of monofunctional compounds, for example, monohydric alcohols. The saturated polyester imides are preferably based on terephthalic acid polyester which may also contain polyols and, as an additional dicarboxylic acid component, a reaction product of diaminodiphenylmethane and trimellitic acid anhydride in addition to diols. Furthermore, unsaturated polyester resins and/or polyester imides, as well as, polyacrylates may also be used.

As component A) further resins can also be used, for example, epoxy resins, for example, based on bisphenol-A-type or bisphenol-F-type, phenolic resins, melamine resins, polymethacrylic imide, polyimides, polybismaleic imides, polyether imides, polybenzoxazine diones, polyhydantoins, polyvinylformals, polyacrylates and derivatives thereof, polyvinylacetals and/or masked isocyanates.

Self crosslinkable resins can be used additionally to the resins of component A), such as, e.g., epoxy novolak resins, as well as the known epoxy hybrid resins, for example, urethane modified epoxy resins, acryl-modified epoxy resins and epoxy esters, with a quantity in a range of 0 to 10 wt% based on the total weight of the coating composition.

Preferred is the use of epoxy resins based on bisphenol-A-type or bisphenol-F-type as component A).

The resins of component B) contain α-carboxy-β-oxocycloalkyl carboxylic acid amide groups. The α-carboxy-β-oxocycloalkyl carboxylic acid amide groups are preferably incorporated in a terminal position. The aforementioned α-carboxy groups are preferably alkyl- or aryl- esterified. α-carboxy-β-oxocycloalkyl carboxylic acid amides of this type may be produced, on the one hand, from the corresponding carboxylic acid or the reactive derivatives thereof, such as, carboxylic acid halide groups, carboxylic acid anhydride groups or the like by reaction with amine groups. It is also expedient to use amidation auxiliaries, such as, dicyclohexylcarbodiimide during synthesis from amine and carboxylic acid. The α-carboxy-β-oxocycloalkyl carboxylic acids, in turn, may be obtained, for example, by reaction with haloformic acid esters under basic conditions and subsequent selective saponification. 1-carboxy-2-oxocycloalkanes may in turn be obtained synthetically, for example, from 1,n-carboxylic acid diesters by reaction with bases with alcohol cleavage. On the other hand, said α-carboxy-β-oxocycloalkyl carboxylic acid amides may also be produced by reaction of said 1-carboxy-2-oxocycloalkanes with isocyanates under basic condition. Said 1-carboxy-2-oxocycloalkanes may be obtained, for example, from glutaric acid dialkyl esters, glutaric acid diaryl esters, adipic acid dialkyl esters, adipic acid diaryl esters, pimelic acid dialkyl esters, pimelic acid diaryl esters, octanoic dyacid dialkyl esters, octanoic dyacid diaryl esters and the alkyl-, aryl-, alkoxy-, aryloxy-, alkylcarboxy-, arylcarboxy-, halogen- and otherwise substituted derivatives thereof, particularly preferably from adipic acid dimethyl and ethyl ester.

The aforementioned isocyanates may be, for example, propylene diisocyanate, trimethylene diisocyanate, tetramethylene diisocyanate, pentamethylene diisocyanate, hexamethylene diisocyanate, ethylethylene diisocyanate, 3,3,4-trimethyl hexamethylene diisocyanate, 1,3-cyclopentyl diisocyanate, 1,4-cyclohexyl diisocyanate, 1,2-cyclohexyl diisocyanate, 1,3-phenylene diisocyanate, 1,4-phenylene diisocyanate, 2,5-toluylene diisocyanate, 2,6-toluylene diisocyanate, 4,4'-biphenylene diisocyanate, 1,5-naphthylene diisocyanate, 1,4-naphthylene diisocyanate, 4,4'-diphenylmethane diisocyanate, 2,4'-diphenylmethane diisocyanate, polynuclear isocyanates which result from the reaction of aniline, formaldehyde and COCl₂ having functionality of > 2, 4,4'-dicyclohexylmethane diisocyanate, 2,4'-dicyclohexylmethane diisocyanate, isophorone diisocyanate, triisocyanatononane or oligomers and polymers built up from these isocyanates (for example, uretdiones, isocyanurates or the like).

Excess urethanes or ureas obtained from said isocyanates, obtainable, for example, by reaction with ethylene glycol, propylene glycol, butane diol, 1,3-propane diol, hexane diol, neopentyl glycol, trimethylol propane, glycerine, pentaerythritol and other diols, triols, tetraols, polyols or else amino alcohols, diamines, triamines and polyamines may also be used.

The aforementioned amines used for amidation may be aliphatic primary diamines, such as, ethylene diamine, propylene diamine, tetramethylene diamine, pentamethylene diamine, hexamethylene diamine, cycloaliphatic diamines, such as, 4,4'-dicyclohexylmethane diamine or else triamines, and it is also possible to use secondary amines. The amines may also be aromatic amines, such as, diaminodiphenylmethane, phenylene diamine, polynuclear aromatic amines with a functionality of > 2, toluylene diamines or corresponding derivatives. It is also possible to use amines with a further functional group in the molecule, for example, amino alcohols such as, monoethanol amine and/or monopropanol amines, or amino acids, such as, glycine, aminopropanoic acids, aminocaproic acids or aminobenzoic acids and the esters thereof.

As the component C), the composition can contain water and/or one or more organic solvents, such as, aromatic hydrocarbons, N-methylpyrrolidone, cresols, phenols, xylenols, styrenes, vinyl toluene, methylacrylates, aliphatic alcohols.

Additionally, the core sheet varnish composition according to the invention may comprise cross-linking agents known for the coating of electrical steel, for example, phenolic resins, melamine resins, blocked isocyanates, epoxides.

Conventional additives and auxiliaries known by a person skilled in the art can also be used in the coating composition of the process, for example, extenders, plasticising components, accelerators, for example metal salts, substituted amines, catalysts, such as, tetrabutyl titanate, isopropyl titanate, cresol titanate, the polymeric forms thereof, dibutyl tin dilaurate, initiators, for example, photo initiators, heat-responsive initiators, stabilisers, for example, hydroquinones, quinones, alkylphenols, alkylphenol ethers, defoamers and flow control agents, in a content of 0 to 10 wt%, preferably 0.1 to 10 wt%, based on the total weight of the coating composition.

The coating composition may also comprise nano-scaled particles having an average particle size in the range of 1 to 300 nm, preferably in the range of 2 to 80 nm. These are, for example, inorganic nano-scaled particles based on compounds, such as, Si0₂, Al₂O₃, TiO₂, boronitride, silicon carbide. The particles can be, for example, compounds based on an element-oxygen network comprising elements from the series consisting of silicon, zinc, aluminium, tin, boron, germanium, gallium, lead, the transition metals and the lanthanides and actinides, in particular, from the series consisting of silicon, titanium, zinc, yttrium, cerium, vanadium, hafnium, zirconium, nickel and/or tantalum. Usable particles are, e.g, colloidal solution or dispersions of such particles, like silica, aluminum oxide, titanium oxide, preferably, colloidal silica, which are commercial available from, e.g., Nyacol^{®} Corp., Grace Davison (Ludox^{®} colloidal silica in water), Nissan Chemical. The surface of the element-oxygen network of the particles can be modified with reactive organic groups, as described, for example, in EP-A 1166283. Examples of suitable reactive particles are Aerosil products from Degussa AG, preferably Aerosil^{®} R 100-8000. The surface of the element-oxygen network of the particles can also be modified with non-reactive groups, partially or totally. Compounds of this type may be contained, for example, in a content of 0 to 70 wt%, preferably 0.1 to 70 wt%, in the composition according to the invention.

The coating composition may contain pigments and/or fillers, for example based on SiO₂, Al₂O₃, TiO₂, Cr₂O₃, for example, colour-imparting inorganic and/or organic pigments, such as, titanium dioxide or carbon black and effect pigments, such as, metal flake pigments and/or pearlescent pigments, in a content of 0 to 60 wt%, preferably 0.1 to 60 wt%, based on the total weight of the coating composition.

The coating composition can additionally contain monomeric and/or polymeric element-organic compounds. Examples of polymeric organo-element compounds include inorganic-organic hybrid polymers of the type mentioned, for example, in DE-A 198 41 977. Examples of monomeric organo-element compounds include ortho-titanic acid esters and/or orthozirconic acid esters such as, nonyl, cetyl, stearyl, triethanolamine, diethanolamine, acetylacetone, acetoacetic ester, tetraisopropyl, cresyl, tetrabutyltitanate and zirconate as well as titanium tetralactate, hafnium and silicon compounds, for example, hafnium tetrabutoxide and tetraethyl silicate and/or various silicone resins. Additional polymeric and/or monomeric organo-element compounds of this type may be contained, for example in a content of 0 to 70 wt%, in the composition according to the invention.

Therefore, the coating composition useable for the process according to the invention is a composition as defined in claim 1.

The composition according to the invention may be produced by simply mixing the individual components together. For example, it is possible to produce resin dispersion by mixing the resin of component A) with water. The further components are then added, for example, with stirring, to produce a stable dispersion, optionally, with input of heat and dispersing agents. It is also possible to produce a mixture of the resin with the organic solvent. The further components are then added, e.g., by stirring.

Water or organic solvents as component C) are added in a quantity such that a solids content of, for example, 30 to 60% is obtained for the finished composition.

Application of the composition by the process according to the invention proceeds, e.g., onto the surface of one or both sides of the electrical steel sheet as one or more layers with a dry layer thickness of, for example, 0.1 to 30 µm, preferably, 0.2 to 20 µm, per layer.

In particular, the composition according to the invention is suitable as a single-layer application.

The present invention is further defined in the following Examples. It should be understood that these Examples are given by way of illustration only. As a result, the present invention is not limited by the illustrative examples set forth hereinbelow, but rather is defined by the claims contained hereinbelow.

### Examples

### Example 1

### Preparation of C-3, C-5 and C-6 electrical insulation varnishes according to the invention

Electrical insulation varnishes having the composition given in Table 1 were prepared from a phenol modified alkyd resin (with nucleophilic OH groups) with a solid content of 68 - 75 weight % in a mixture of water and organic solvent. The polyamide resin contains at least two α-carboxy-β-oxocycloalkyl carboxylic acid amide groups per molecule. It was added as a solution with a solid content of 48 - 52% in a mixture of water and organic solvent. As inorganic filler Kaoline was used with a solid content of 100 weight%. Afterwards, the addition of additives (defoamer, catalyst, wetting agent, corrosion inhibitor) and of pigment as well as butyl propylene glycol as organic solvent and/or water was processed. Dimethylethanolamine was used to adjust the pH-value. The mixture was stirred and grinded homogeneous.

**Table 1**

| Constituent | Amount in wt% | | |
|---|---|---|---|
| | Ex. C-3 Insulation class according to ASTM-A976-03 | Ex.C-5 Insulation class according to ASTM-A976-03 | Ex.C-6 Insulation class according to ASTM-A976-03 |
| Phenol modified alkyd resin with nucleophilic OH groups (solid content 68-75 wt% in water and organic solvent) | 68 | 55 | 29 |
| Polyamide resin with two α-carboxy-β-oxocycloalkyl carboxylic acid amide groups per molecule (solid content 48-52 wt% in water and organic solvent) | 17 | 13,7 | 5 |
| Water / Butyl propylene glycol | 14 | 16 | 4 |
| Kaoline filler | - | 12 | 55 |
| Pigments | 0,4 | 0,3 | 2 |
| Additives | 0,6 | 3 | 5 |
| | 100 | 100 | 100 |

The coating compositions containing the components listed in Table 1 were coated on grain oriented steel to form an insulation layer with dry film-thickness of 1µm (+/- 0.5). The steel sheets roughness Ra of 0.5 µm or less was used. A roller-coater was used to apply the varnish on steel sheet. The applied film was cured at a PMT (peak metal temperature) from 180°C to 270°C and cooled in the atmosphere.

### Example 2

### Preparation of C-3, C-5 and C-6 electrical insulation varnishes of prior art

Electrical insulation varnishes of prior art having the composition given in Table 2 were prepared from a phenol modified alkyd resin (with nucleophilic OH groups) with a solid content of 68 - 75 wt % in a mixture of water and organic solvent. As inorganic filler Kaoline was used with a solid content of 100 weight%. A melamine-formaldehyde resin that is partially methylated with a solid content of 90 - 99 wt% was used as crosslinking binder. Afterwards, the addition of additives (defoamer, catalyst, wetting agent, corrosion inhibitor) and of pigment as well as butyl propylene glycol as organic solvent and/or water is processed. Dimethylethanolamine was used to adjust the pH-value. The mixture was stirred and grinded homogeneous.

**Table 2**

| Constituent Prior Art | Amount in wt% | | |
|---|---|---|---|
| | Ex.C-3 Insulation class according to ASTM-A976-03 | Ex.C-5 Insulation class according to ASTM-A976-03 | Ex. C-6 Insulation class according to ASTM-A976-03 |
| | Prior art | Prior art | Prior art |
| Phenol modified alkyd resin with nucleophilic OH groups (solid content 68-75 wt% in water and organic solvent) | 50 | 41 | 25 |
| Melamine-formaldehyde resin, partially methylated (solid content of 90-99 wt%) | 12 | 6,9 | 5 |
| Water / Butyl propylene glycol | 36,5 | 36,1 | 7 |
| Kaoline filler | - | 10 | 55 |
| Pigments | 0,4 | 2 | 2 |
| Additives | 1,1 | 4 | 6 |
| | 100 | 100 | 100 |

The coating compositions as indicated in Table 2 are applied and cured on electrical steel sheets by the same methods and under the same conditions as described in Example 1. Also the method of preparing the steel sheets core is the same as in Example 1.

### Example 3

### Testings

The technical properties of the new C3, C 5 and C6 coatings according to the invention compared to the prior art as reference are described in Table 3.

The coated steel sheets have been tested according to common or internal standards. In Table 3 line 3 the solvent stability is tested by a wiping solvent test with a pressure of 1 kg by double rub until 30 double rubs have been completed. The acetone solvent test also indicated the curing characteristics of the dried film. In line 9 the abrasion resistance was measured with an abrasion tester designed by DuPont. Determination of dust quantity of coated to coated steel sheets with 5 kg pressure within 30 double rubs. In line 11 the quality of welding is given by bubble free and soot-free seam according to the steel-and-iron test sheet SEP 1210.

These results show that the coatings according to the invention provide excellent curing performance, adherence and surface insulation resistance within film thickness from 0.5 to 10 µm. Further, the corrosion resistance of the coatings according to the invention is improved compared to coatings of prior art. The TIG weldability of electrical steel coated according to the invention is improved for C-3 and C-5 coating compared to films of prior art. The coatings according to the invention show a high performance in scratch resistance and abrasion in the corresponding insulation class which indicates that the film will show minor rub marks and scratches after slitting or punching compared to film of prior art.

**Table 3**

| Coating Properties | Ex. Insulat ion class C-3 | Ex. Insulat ion class C-3 Prior art | Ex. Insulat ion class C-5 | Ex. Insulat ion class C-5 Prior art | Ex. Insulat ion class C-6 | Ex. Insulat ion class C-6 Prior art |
|---|---|---|---|---|---|---|
| 1. Dry coating thickness [µm] | 0.5 to 3 | 0.5 to 3 | 0.5 to 3 | 0.5 to 2 | 3 to 10 | 3 to 10 |
| 2. Curing speed [sec] (Mathis oven at temperatur 300°C PMT 200°C to 250°C) | 25 | 30 | 25 | 30-35 | 30 | 35 |
| 3. Solvent stability 30 times with acetone and ethanole | ok | ok | ok | ok | ok | ok |
| 4. Adhesiveness Cross cut test multi blade tool 2mm ISO 2409 | 0 | 0 | 0 | 0 | 0 | 0 |
| 5. Scratch resistance at 2µm in [%] ISO 1518 | 100 | 80 | 100 | 80 | 100 | 80 |
| 6. Corrosion resistance- Salt spray test DIN EN ISO 9227 Evaluation of corrosion surface [%] | <40 (3µm /24h) | 60 (3µm /24h) | <50 (1µm /5h) | 100 (1µm /5h) | <20 6µm/24h | 40 6µm/24h |
| 7. Surface insulation resistance [Ohm cm²/L ASTM A 717-06 | >80 (3µm) | >60 (3µm) | >70 (2µm) | >50 (2µm) | >1500 (5µm) | >1500 (5µm) |
| 8. Surface insulation after Annealing DIN IEC 60404-12 | n.a | n.a | 3 to 7 | 2 to 4 | n.a | n.a |
| 9. Abrasion resistance under 5kg pressure [mg] | <0.5 | <1.0 | <1.0 | >1.5 | <1.5 | >2 |
| 10. Interlocking performance [%] | 100 | 100 | 100 | 90 | n.a | n.a |
| 11. Welding (TIG) SEP 1210 | 100 | 0 | 100 | 90 | n.a | n.a |
| Pressure:160N/cm² | | | | | | |
| speed: 600mm/min | | | | | | |
| bubble-free/no soot = 100% | | | | | | |
| 3-4 bubbles/no soot= 90% | | | | | | |
| 3-4 bubbles/soot = 80% | | | | | | |
| 12. Pressure stability (Stack-shrinkage 160°C/500h) | n.a | n.a | n.a | n.a | <0.4% | <0.7% |
| 13. Overcoatability [%] | 100 | 100 | 100 | 100 | 100 | 100 |

## Claims

1. A coating process for electrical steel sheets to stack and assamble the coated steel sheets to form a sheets core by welding, clamping, interlocking, aluminium die casting or riveting, using a core sheet
varnish composition, comprising the steps of
a) applying at least one coating layer of a core sheet varnish composition onto the surface of the electrical steel sheets by spraying, rolling or dip coating onto the surface of one or both sides of the electrical steel sheets, the core sheet varnish composition comprising
(A) 5 to 60 wt% of at least one resin with nucleophilic groups selected from the group consisting of OH, NHR, SH, carboxylate and CH-acidic groups, the resins are selected from the group of poly(meth)acrylates, polyurethanes, alkyd resins, epoxy resins, polyesters, polyester amides/imides, silicon resins, polyolefines, polyvinyl alcohols and polytitanesters,
(B) 1 to 50 wt% of at least one amide group-containing resin containing α-carboxy-β-oxocycloalkyl carboxylic acid amide groups, wherein said α-carboxy-β-oxocycloalkyl carboxylic acid amide groups are produced from α-carboxy-β-oxocycloalkyl carboxylic acid or the reactive derivates thereof by reaction with amine groups of aliphatic primary diamines, cycloaliphatic diamines, triamines, secondary amines, aromatic amines, amino alcohols, amino acids or esters thereof or produced from 1-carboxy-2-oxocycloalkanes with isocyanates under basic conditions,
(C) 5 to 90 wt% of at least one organic solvent and/or water,
(D) 0 to 10 wt% of conventionally used additives or auxiliaries,
(E) 0 to 70 wt% of nano-scaled particles, and
(F) 0 to 60 wt% of conventionally used fillers and/or pigments, the wt% based on the total weight of the coating composition, and
b) curing the applied coating layer, wherein curing takes places at temperatures providing a PMT (peak metal temperature) in the range of 180 to 270°C.

2. The coating process according to claim 1 wherein applying at least one coating layer of a core sheet varnish composition comprising
(D) 0.1 to 10 wt% of conventionally used additives or auxiliaries,
(E) 0.1 to 70 wt% of nano-scaled particles, and
(F) 0.1 to 60 wt% of conventionally used fillers and/or pigments, the wt% based on the total weight of the coating composition A to F.

3. The coating process according to claim 1 and 2 wherein epoxy resins based on bisphenol-A-type and/or bisphenol-F-type are used as component A) in the core sheet varnish composition.

4. The coating process according to claim 1 to 3 wherein the α-carboxy-β-oxocycloalkyl carboxylic acid amide groups are incorporated in component B) in a terminal position in the core sheet varnish composition.

5. The coating process according to claim 1 to 5 wherein the nano scaled particles are reactive with component A) and/or B) in the core sheet varnish composition.

6. The coating process according to claim 1 to 5 wherein monomeric and/or polymeric element-organic compounds are contained in the core sheet varnish composition.

7. A process of preparation an electrical steel sheets core by stacking and assembling of electrical steel sheets to form a sheets core by technical means selected from the group consisting of welding, clamping, interlocking, aluminium die casting and riveting wherein the steel sheets coated with the coating process of claims 1 to 6.

8. The process of claim 7 wherein stacking and assembling by welding.

9. An electrical steel sheet coated with the coating process of claims 1 to 6.

10. An electrical steel sheets core prepared from electrical steel sheets coated with the coating process of claim 1 to 6.

## Patentansprüche

1. Beschichtungsverfahren für Elektrostahlplatten zum Stapeln und Zusammenfügen der beschichteten Stahlplatten, um durch Schweißen, Zusammenklemmen, Ineinandergreifen, Aluminiumdruckgießen oder Vernieten unter Anwendung einer Kernplattenlackzusammensetzung einen Plattenkern zu bilden, umfassend die Schritte des
a) Aufbringens mindestens einer Beschichtungsschicht aus einer Kernplattenlackzusammensetzung auf die Oberfläche der Elektrostahlplatten durch Spritz-, Walz- oder Tauchbeschichten der Oberfläche einer oder beider Seiten der Elektrostahlplatten, wobei die Kernplattenlackzusammenetzung Folgendes umfasst
(A) 5 bis 60 Gew.-% mindestens eines Harzes mit nukleophilen Gruppen ausgewählt aus der Gruppe bestehend aus OH-, NHR-, SH-, Carboxylat- und CH-sauren Gruppen, wobei die Harze aus der Gruppe ausgewählt sind von Poly(meth)acrylaten, Polyurethanen, Alkydharzen, Epoxidharzen, Polyestern, Polyesteramiden/imiden, Siliciumharzen, Polyolefinen, Polyvinylalkoholen und Polytitanestern,
(B) 1 bis 50 Gew.-% mindestens eines Amidgruppen enthaltenden Harzes, das α-Carboxy-β-oxocycloalkylcarbonsäureamidgruppen enthält, wobei die α-Carboxy-β-oxocycloalkylcarbonsäureamidgruppen aus α-Carboxy-β-oxocycloalkylcarbonsäure oder den reaktiven Derivaten davon durch Reaktion mit Amingruppen von aliphatischen, primären Diaminen, cycloaliphatischen Diaminen, Triaminen, sekundären Aminen, aromatischen Aminen, Aminoalkoholen, Aminosäuren oder Estern davon hergestellt werden oder aus 1-Carboxy-2-oxocycloalkanen mit Isocyanaten unter basischen Bedingungen hergestellt werden.
(C) 5 bis 90 Gew.-% mindestens eines organischen Lösungsmittels und/oder Wasser.
(D) 0 bis 10 Gew.-% herkömmlicherweise verwendete Zusatzmittel oder Hilfsmittel,
(E) 0 bis 70 Gew.-% Teilchen im Nanomaßstab und
(F) 0 bis 60 Gew.-% herkömmlicherweise verwendete Füllstoffe und/oder Pigmente,
wobei die Gew.-% auf das Gesamtgewicht der Beschichtungszusammensetzung bezogen sind, und
b) Aushärtens der aufgebrachten Beschichtungsschicht, wobei das Aushärten bei Temperaturen stattfindet, die eine HMT (Höchstmetalltemperatur) im Bereich von 180 bis 270 °C bereitstellt.

2. Beschichtungsverfahren nach Anspruch 1, wobei das Aufbringen mindestens einer Beschichtungsschicht aus einer Kernplattenlackzusammensetzung Folgendes umfasst
(D) 0,1 bis 10 Gew.-% herkömmlicherweise verwendete Zusatzmittel oder Hilfsmittel,
(E) 0,1 bis 70 Gew.-% Teilchen im Nanomaßstab und
(F) 0,1 bis 60 Gew.-% herkömmlicherweise verwendete Füllstoffe und/oder Pigmente,
wobei die Gew.-% auf das Gesamtgewicht der Beschichtungszusammensetzung (A) bis (F) bezogen sind.

3. Beschichtungsverfahren nach Anspruch 1 und 2, wobei Epoxidharze, die auf dem Bisphenol-A-Typ und/oder dem Bisphenol-F-Typ basieren, als Komponente A) in der Kernplattenlackzusammenetzung verwendet werden.

4. Beschichtungsverfahren nach Anspruch 1 bis 3, wobei die α-Carboxy-β-oxocycloalkylcarbonsäureamidgruppen in die Komponente B) an einer endständigen Position in der Kernplattenlackzusammenetzung integriert sind.

5. Beschichtungsverfahren nach Anspruch 1 bis 5, wobei die Teilchen im Nanomaßstab mit der Komponente A) und/oder B) in der Kernplattenlackzusammenetzung reaktiv sind.

6. Beschichtungsverfahren nach Anspruch 1 bis 5, wobei monomere und/oder polymere elementorganische Verbindungen in der Kernplattenlackzusammenetzung enthalten sind.

7. Verfahren zur Herstellung eines Elektrostahlplattenkerns durch Stapeln und Zusammenfügen von Elektrostahlplatten unter Bildung eines Plattenkerns durch technische Mittel ausgewählt aus der Gruppe bestehend aus Schweißen, Zusammenklemmen, Ineinandergreifen, Aluminiumdruckgießen oder Vernieten, wobei die Stahlplatten durch das Beschichtungsverfahren nach Anspruch 1 bis 6 beschichtet werden.

8. Verfahren nach Anspruch 7, wobei das Stapeln und Zusammenfügen durch Schweißen erfolgt.

9. Elektrostahlplatte, die durch das Beschichtungsverfahren nach den Ansprüchen 1 bis 6 beschichtet ist.

10. Elektrostahlplattenkern, der aus Elektrostahlplatten hergestellt ist, die durch das Beschichtungsverfahren nach Anspruch 1 bis 6 beschichtet sind.

## Revendications

1. Procédé de revêtement de feuilles d'acier magnétique pour empiler et assembler les feuilles d'acier revêtues afin de former un noyau de feuilles par soudage, pinçage, interverrouillage, coulée d'aluminium dans une filière ou rivetage, en utilisant une composition de vernis de feuilles formant noyau, comprenant les étapes de
a) application d'au moins une couche de revêtement d'une composition de vernis de feuilles formant noyau sur la surface des feuilles d'acier magnétique par étalement, enroulement ou revêtement par immersion sur la surface de l'une ou des deux faces des feuilles d'acier magnétique, la composition de vernis de feuilles formant noyau comprenant
(A) 5 à 60 % en pds d'au moins une résine avec des groupes nucléophiles sélectionnés parmi le groupe constitué des groupes OH, NHR, SH, carboxylate et CH acide, les résines sont sélectionnées parmi le groupe des poly(méth)acrylates, polyuréthanes, résines alkydes, résines époxy, polyesters, polyester amides/imides, résines de silicone, polyoléfines, poly(alcool de vinyle) et poly(esters de titane),
(B) 1 à 50 % en pds d'au moins une résine contenant des groupes amide contenant des groupes amide d'acide α-carboxy-β-oxocycloalkyl carboxylique, dans laquelle lesdits groupes amide d'acide α-carboxy-β-oxocycloalkyl carboxylique sont produits à partir d'acide α-carboxy-β-oxocycloalkyl carboxylique ou des dérivés réactifs de celui-ci par la réaction avec les groupes amine de diamines primaires aliphatiques, de diamines cycloaliphatiques, de triamines, d'amines secondaires, d'amines aromatiques, d'alcools aminés, d'acides aminés ou des esters de ceux-ci ou produits à partir de 1-carboxy-2-oxocycloalcanes avec des isocyanates sous des conditions alcalines,
(C) 5 à 90 % en pds d'au moins un solvant organique et/ou d'eau,
(D) 0 à 10 % en pds d'additifs ou d'auxiliaires classiquement utilisés,
(E) 0 à 70 % en pds de particules d'échelle nanoscopique, et
(F) 0 à 60 % en pds de charges et/ou de pigments classiquement utilisés,
les % en pds basés sur le poids total de la composition de revêtement, et
b) durcissement de la couche de revêtement appliquée, dans laquelle le durcissement a lieu à des températures fournissant une TPM (température pic du métal) située dans la plage de 180 à 270°C.

2. Procédé de revêtement selon la revendication 1 dans lequel l'application d'au moins une couche de revêtement d'une composition de vernis de feuilles formant noyau comprenant
(D) 0,1 à 10 % en pds d'additifs ou d'auxiliaires classiquement utilisés,
(E) 0,1 à 70 % en pds de particules d'échelle nanoscopique, et
(F) 0,1 à 60 % en pds de charges et/ou de pigments classiquement utilisés,
les % en pds basés sur le poids total de la composition de revêtement (A) jusqu'à (F).

3. Procédé de revêtement selon la revendication 1 et 2 dans lequel les résines époxy à base de type bisphénol A et/ou de type bisphénol F sont utilisées comme composant A) dans la composition de vernis de feuilles formant noyau.

4. Procédé de revêtement selon la revendication 1 à 3 dans lequel les groupes amide d'acide α-carboxy-β-oxocycloalkyl carboxylique sont incorporés dans le composant B) en une position terminale dans la composition de vernis de feuilles formant noyau.

5. Procédé de revêtement selon la revendication 1 à 5 dans lequel les particules d'échelle nanoscopique sont réactives vis-à-vis du composant A) et/ou B) dans la composition de vernis de feuilles formant noyau.

6. Procédé de revêtement selon la revendication 1 à 5 dans lequel les composés organiques à élément monomère et/ou polymère sont contenus dans la composition de vernis de feuilles formant noyau.

7. Procédé de préparation d'un noyau de feuilles d'acier magnétique par empilement et assemblage de feuilles d'acier magnétique pour former un noyau de feuilles à l'aide de moyens techniques sélectionnés parmi le groupe constitué de la soudure, du pinçage, de l'interverrouillage, de la coulée d'aluminium dans une filière et du rivetage dans lequel les feuilles d'acier sont revêtues selon le procédé de revêtement selon les revendications 1 à 6.

8. Procédé selon la revendication 7 dans lequel l'empilement et l'assemblage sont effectués par soudure.

9. Feuille d'acier magnétique revêtue grâce au procédé de revêtement selon les revendications 1 à 6.

10. Noyau de feuilles d'acier magnétique préparé à partir de feuilles d'acier magnétique revêtues selon le procédé de revêtement selon la revendication 1 à 6.
